# EUROPEAN PATENT SPECIFICATION

(11) **EP 0 827 450 B1**
(45) Date of publication and mention of the grant of the patent: **28.01.2004**
(21) Application number: 96913644.9
(22) Date of filing: 10.05.1996
(51) Int. Cl.: B32B 5/26, B03C 3/28, A47L 9/10, A47C 31/10, A47G 9/00

(54) **ALLERGEN PARTICLE EXCLUSION AND/OR RETENTION COVERING**
ALLERGENPARTIKEL AUSSCHLIESSENDE UND/ODER ZURÜCKHALTENDE ABDECKUNG
HABILLAGE PERMETTANT L'ELIMINATION ET/OU LA RETENUE DE PARTICULES D'ALLERGENE

(30) Priority: 20.05.1995 GB 9510234
(43) Date of publication of application: 11.03.1998
(73) Proprietor: Advanced Allergy Technologies Limited, Altrincham, Cheshire WA15 8EB (GB)
(72) Inventor: PEARSON, David, John, Altrincham Cheshire WA15 8EB (GB); GOODWIN, Richard, John, Bredbury Stockport Cheshire SK6 2HQ (GB)
(74) Representative: McNeight, David Leslie
(86) International application number: PCT/GB1996/001116
(87) International publication number: WO 1996/036483

(56) References cited:
- DE-A- 3 905 565
- GB-A- 2 048 110
- GB-A- 2 242 142
- US-A- 4 375 718
- US-A- 4 917 942
- US-A- 5 112 677
- US-A- 5 308 691

## Description

This invention relates to allergen particle exclusion and/or retention coverings.

It is, of course, possible to cover items, particularly domestic items such as bedding, (mattresses, duvets, pillows etc) with allergen particle exclusion and/or retention coverings which are totally impermeable, and therefore 100% effective as a barrier to allergenic organisms and particles such as house dust mites and their faeces. However, the other properties of such totally impermeable coverings are less than satisfactory - for use as bedding, the fact that such materials cannot breathe renders them at best uncomfortable, more seriously unhealthy in that for chronically bedridden patients (where incontinence might also be a problem) they might give rise to bed-sore problems.

Materials have been prepared including microporous materials and materials such as polyurethanes which are impermeable to liquid water but which allow water to be transferred from one face to the other, which address these problems, but, though these materials are better in many respects than the totally impermeable materials, they still leave much to be desired as regards their performance as textiles. For example, materials which have pores sufficiently restricted to prevent the passage of mite Der p 1 allergen have such a high resistance to airflow as to render then capable of causing death by asphyxia - they do not achieve the minimum airflow specified in British Standard 4578, 1970.

US-A-4375718 discloses a process of manufacturing an electrostatically charged filtration medium which may be used for a surgical face mask.

GB-A-2242142 discloses a filter material comprising the combination of a layer of filter material having electrostatic properties and a layer of filter medium without electrostatic properties. The medium is a lofted material arranged to retain particles in the sub-micron and lower micron ranges and may be used in respirators.

US-A-4917942 discloses a microfibrous filtration laminate comprising a highly permeable layer of a self-supporting nonwoven fabric which provides support for a layer of a randomly intertangled nonwoven mat of electret-containing microfibers of synthetic polymer. The filtration laminate is said to be particularly useful as disposable filter bags or as a lining material for disposable paper filter bags for vacuum cleaners.

GB-A-2048110 discloses an air filter assembly including an electret filter sheet of material which exhibits electrical charges of opposite sign on opposite faces thereof and a non-electret conventional filter sheet of material combined with and disposed upstream from the electret filter sheet of material, whereby particles of a large diameter are collected by the non-electret filter sheet of material and particles of a small diameter are collected by the electret filter sheet of material without causing clogging or air pressure loss.

DE-A-3905565 discloses a filter bag, which is used in dust-extracting appliances and has a multi-layer bag wall made of air-permeable material. One layer of the multi-layer bag wall may consist of an electrostatically chargeable material, which consolidates very fine dust. The filter bag may have a germicidal layer, which consists of material which kills allergens or is provided with such a material or medium. The air escaping from the filter bag is then free from such allergens.

US-A-5308691 discloses controlled porosity composite sheets comprising a melt-blown polypropylene fiber web having a spunbonded polypropylene fiber sheet laminated to at least one side, being made by calendering an assembly of the component webs in such a manner that, when a two-layer composite sheet is made, the web of melt-blown fibers is in contact with a metal roll. These composite sheets are said to be particularly suitable for making housewrap sheets and sheets for sterile packaging.

The present invention provides improved coverings that do not have the aforesaid disadvantages and indeed have other advantages over the prior art coverings.

The invention comprises an allergen particle exclusion cover forming a casing in which body of material may be enclosed, said cover comprising a laminate fabric having an air permeability in excess of that specified in British Standard 4578, 1970 and comprising a porous fabric layer having electrostatic charge which traps material in the pores.

The porous fabric layer may have an overall electrostatic charge, and may be a fabric such as Villedon ® in which the charge is induced during manufacture of the fabric.

The porous fabric layer may, on the other hand, have no overall charge, and may be a blend of fibres which have opposing electrical charges, such for example as polypropylene and acrylic fibres.

The porous fabric layer may be laminated to a fabric having at least commensurate permeability. Since the filtering of particles is effected electrostatically, there is no demanding limitation on the permeability of the porous fabric, and fabrics having a wide range of permeabilities may be found useful for different purposes. The porous fabrics themselves might be unsuitable *per se* as regards requirements other than the filtration of allergens, and the defects can be made good by lamination to a fabric which is suitable in those other respects.

The porous fabric layer may be a knitted, woven or non-woven fabric, and may be laminated with another fabric on one or both faces. For some applications, the outer fabric face may be water proofed as by a silicon or like coating which, or some other coating, may also make the fabric soil resistant. Resistance in other regards may also be imparted, e.g. fire resistance or retardancy, mildew resistance and so on, care being taken, naturally, not to reduce the permeability of the composite, treated fabric to an extent which brings it below the minimum requirement for the prescribed end use.

The invention also comprises an article covered by a covering as described, such, for example, as an article of bedding or a child's or infant's toy - a teddy bear or doll, for instance. The article may have a separate outer cover, which may be removable, and such a removable cover may be closable by a tight seal so as to leave no path for allergenic material from inside to outside of the cover. A slide fastener, for example, may be underlain by a sealing flap.

In addition to the allergen particle exclusion and/or retention covering, there may be a separate removable covering. A soft toy, for example, may have a permanent outer covering on a basic foam, padding or like interior, the permanent outer cover being of the allergen exclusion material. This may in turn be covered by a removable outer covering which is washable and which provides the aesthetic features of the toy.

Embodiments of allergen particle exclusion and/or retention coverings and of articles comprising the same according to the invention will now be described with reference to the accompanying drawings, in which:-
- Figure 1: is a diagrammatic cross-section through one embodiment of a fabric,
- Figure 2: is a diagrammatic cross-section through another embodiment of a fabric,
- Figure 3: is a diagrammatic cross-section through an article such as a pillow case covered in a fabric as illustrated in Figure 1 or Figure 2,
- Figure 4: is a diagrammatic cross-section through a second embodiment of a pillow case or like article, and
- Figure 5: is an illustration of a soft toy with a removable cover, showing the cover removed.

The drawings illustrate allergen particle exclusion and/or retention coverings comprising a permeable composite fabric of which one component 11 is a porous fabric having electrostatic charge which traps particles in the pores.

Specialist such fabrics are available such for example as "Villedon" ® manufactured by Freudenberg which has a high electrostatic charge induced during manufacture, or "Technostat" ® manufactured by Hepworth Mineral and Chemicals Limited in which opposed electrostatic charges are held by polypropylene and modacrylic fibres within a material of overall electrostatic neutrality.

For general textile usage, the porous fabric 11 is laminated to a fabric 12 having at least commensurate permeability. It is not essential that the fabric 12 has a greater permeability than the porous electrostatic fabric 11, but that it does not have a permeability which is so low as to detract from the overall utility of the composite. The electrostatic fabric may have a permeability much higher than is actually required for the end use of the composite, in which case the laminated fabric 12 may have a lesser permeability and indeed such a fabric with a lower permeability may be chosen by way of controlling the permeability of the composite, as indeed may the laminating method and any finishing treatments.

Generally speaking, however, the fabric 12 - which may be knitted, woven or indeed unwoven, will have textile properties which are lacking in the electrostat, such as strength, stability, texture, the ability to be patterned or coloured or to accept print, resistance to pilling, inherent flame resistance or flame retardancy and so on, or which supplement or enhance those properties to the extent they are possessed by the electrostatic fabric 11.

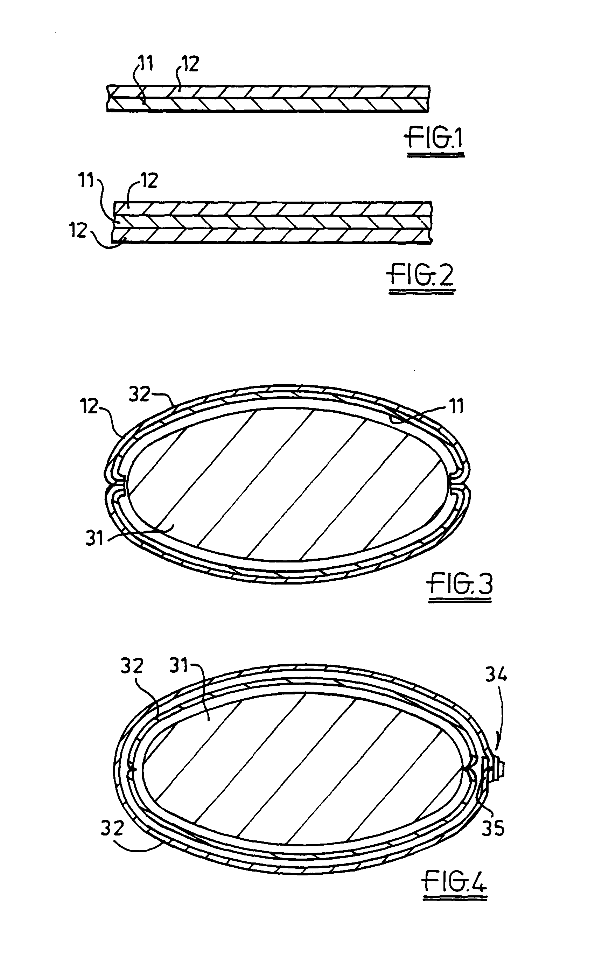

For many uses in household textiles, a polyester cotton fabric serves very well as a fabric to which the electrostatic fabric 11 may be laminated. The lamination may be on one face as illustrated in Figure 1 or two faces as seen in Figure 2, in which latter case the fabrics 12 on opposite faces may be different if desired.

Lamination may be by any convenient method that, naturally, does not adversely affect the permeability of the composite, by which is meant to reduce the permeability to an unacceptably low level for the end use in question. Spot bonding, in which discrete spots of adhesive join the layers is clearly, then, going to be suitable for many applications, but even quilting and stitch bonding may be found useful in some circumstances.

Finishing treatments such for example as waterproofing using e.g. a silicone spray, flame proofing or flame retardant impregnation, crease-proofing and so on may all be carried out with the same caveat namely so as not to adversely affect the permeability.

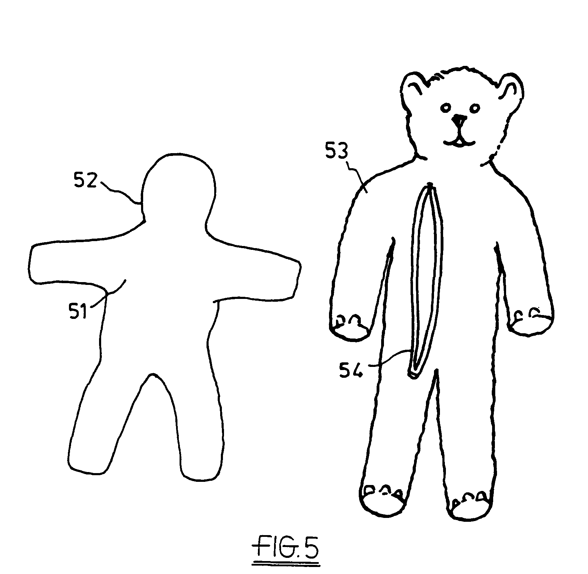

Figures 3 and 4 illustrate, merely by way of example, pillows comprising a filling 31 such as a foam or padding or down encased in a cover 31. In Figure 3, the cover 32 is of the composite material with the electrostat 11 on the inside and a polyester cotton or other conventional woven or knitted textile fabric 12 on the outside. Figure 4 illustrates a pillow which has its filling 31 encased in a conventional fabric 33 with a further case 32 like that of Figure 3 but in this case being removable for laundering by having a slide fastener 34 which is, bearing in mind the anti-allergy purpose of the cover 32, desirably of a type which makes a good seal. For seal reinforcement, a flap 35 is shown underlying the fastener 34.

It is desirable, especially for those prone to asthma and like allergy disorders, for a complete bedding system to be encased after the fashion of the pillows in Figures 3 and 4, that is to say not only the pillows but also the mattress, duvet, quilt and so on. And, while bedding is important to protect, it may also be desirable to protect other furnishing items, such as the upholstery of chairs, settees, cushions and so on. The composite fabric of the invention is substantially unlimited as to the choice of material that may be laminated to the electrostat, so that even heavy upholstery fabrics may be used in the composite and even non-textile fabrics such as hyde and suede can be laminated provided they have sufficient permeability as, for example, by punch-out designs to warrant such attention. It must be remembered that even where an upholstery material is essentially non-porous, so that passage across it of allergen particles is not a problem, it is usually only the visible parts of the article that are of such material, the undersides and often the backs of chairs and sofas being either open or of coarse woven fabric such as sacking - at least this material, according to the invention, can be usefully substituted by the electrostat material of the invention if it is desired to permit the inside of the piece to breathe so as not to balloon when sat on.

An important area for attention is children's and particularly infants' soft toys, and Figure 5 illustrates a basic soft toy form 51 which is covered with a composite electrostat fabric 52 and a separate cover 53 of conventional washable fabric which is closed by a slide fastener 54 for removal for laundering. The form 51 could of course be made completely impermeable, but would then have a certain internal gas pressure which would detract from the "feel" of the toy. The outer cover 53 has the aesthetic features, e.g. face, paws and so on of the toy.

## Claims

1. An allergen particle exclusion cover forming a casing in which a body of material may be enclosed, said cover comprising a laminate fabric having an air permeability in excess of that specified in British Standard 4578, 1970 and comprising a porous fabric layer (11) having electrostatic charge which traps material in the pores.

2. A cover according to claim 1, in which the said porous layer (11) has an overall electrostatic charge.

3. A cover according to claim 2, in which the said porous layer (11) is a fabric such as Villedon ® in which the charge is induced during manufacture of the fabric.

4. A cover according to claim 1, in which the said porous layer (11) is a fabric having no overall charge.

5. A cover according to claim 4, in which the said porous layer (11) is a blend of fibres which have opposing electrical charges.

6. A cover according to claim 5, in which the said fibres comprise polypropylene and acrylic fibres.

7. A cover according to any one of claims 1 to 6, in which the said porous layer (11) is laminated to a fabric (12) having at least commersurate permeability.

8. A cover according to any one of claims 1 to 7, in which the said porous layer (11) is a woven fabric.

9. A cover according to any one claims 1 to 7, in which the said porous layer (11) is a knitted fabric.

10. A cover according to any one of claims 1 to 9, in which the said porous layer (11) is laminated with another fabric on both faces.

11. A cover according to any one of claims 1 to 10, in which an outer face of the laminate fabric is waterproofed.

12. A cover according to claim 11, in which the waterproofing is effected through silicon or like coating.

13. A cover according to any one of claims 1 to 12, in which the outer face of the laminate fabric is soil resistant.

14. A cover according to any one of claims 1 to 13 in which a filling, optionally a foam, padding or down, is encased.

15. An article of bedding provided with a cover as claimed in any one of claims 1 to 14.

16. An article in the form of a child's or infant's toy provided with a cover as claimed in any one of claims 1 to 14.

17. An article of furnishing provided with a cover as claimed in any one of claims 1 to 14.

18. An upholstered article of furnishing, the upholstery being provided with an allergen particle exclusion covering comprising a laminate fabric having an air permeability in excess of that specified in British Standard 4578, 1970 and comprising a porous fabric layer (11) having electrostatic charge which traps material in the pores.

19. An article (51) according to any one of claims 15 to 18, having a separate outer cover (32;53).

20. An article (51) according to claim 19, in which the separate outer cover (32;53) is removable.

21. An article (51) according to claim 19 or claim 20, in which the separate outer cover (32) is closable by a tight seal (34) so as to leave no path for allergenic material from inside to outside of the cover.

22. An article (51) according to claim 21, in which the said outer cover (53) is closable by slide fastener means (34).

23. An article (51) according to claim 21 or claim 22, in which a linear fastening (34) arrangement is underlain by a sealing flap (35).

24. An article according to any one of claims 15 to 23, in which in addition to the allergen particle exclusion cover there is a separate removable cover (53).

## Patentansprüche

1. Allergenteilchen-Sperrabdeckung, die eine Umhüllung bildet, in der ein Körper aus einem Material eingeschlossen werden kann, welche Abdeckung ein beschichtetes Textilerzeugnis aufweist, das eine Luftdurchlässigkeit besitzt, die über der im britischen Standard 4578, 1970 bestimmten liegt, und das mit einer porösen Textilschicht (11) versehen ist, die eine elektrostatische Ladung hat, welche Material in Poren hält.

2. Abdeckung nach Anspruch 1, bei der die poröse Schicht (11) eine elektrostatische Gesamtladung hat.

3. Abdeckung nach Anspruch 2, bei der die poröse Schicht (11) ein Textilerzeugnis aus Villdon® ist, in welches die Ladung während der Herstellung des Textilerzeugnisses induziert wurde.

4. Abdeckung nach Anspruch 1, bei der die poröse Schicht (11) ein Textilerzeugnis ist, das keine Gesamtladung aufweist.

5. Abdeckung nach Anspruch 4, bei der die poröse Schicht (11) eine Mischung aus Fasern ist, die entgegengesetzte elektrische Ladungen haben.

6. Abdeckung nach Anspruch 5, bei der die Fasern Polypropylen- und Acrylfasern aufweisen.

7. Abdeckung nach einem der Ansprüche 1 bis 6, bei der die poröse Schicht (11) auf ein Textilerzeugnis (12) geschichtet ist, das zumindest eine gleich große Durchlässigkeit hat.

8. Abdeckung nach einem der Ansprüche 1 bis 7, bei der die poröse Schicht (11) ein gewebtes Textilerzeugnis ist.

9. Abdeckung nach einem der Ansprüche 1 bis 7, bei der die poröse Schicht (11) ein gewirktes Textilerzeugnis ist.

10. Abdeckung nach einem der Ansprüche 1 bis 9, bei der die poröse Schicht (11) mit einem anderen Textilerzeugnis auf beiden Flächen beschichtet ist.

11. Abdeckung nach einem der Ansprüche 1 bis 10, bei der die äußere Fläche des geschichteten Textilerzeugnisses wasserdicht ist.

12. Abdeckung nach Anspruch 11, bei der die Wasserdichtheit durch Silizium oder eine ähnliche Beschichtung bewirkt ist.

13. Abdeckung nach einem der Ansprüche 1 bis 12, bei der die äußere Fläche des geschichteten Textilerzeugnisses schmutzabweisend ist.

14. Abdeckung nach einem der Ansprüche 1 bis 13, bei der eine Füllung, wahlweise ein Schaum, ein Polster oder Daunen, eingeschlossen ist.

15. Gegenstand für Betten, der mit einer Abdeckung nach einem der Ansprüche 1 bis 14 versehen ist.

16. Gegenstand in der Form eines Kinder- oder Säuglingsspielzeugs, der mit einer Abdeckung nach einem der Ansprüche 1 bis 14 versehen ist.

17. Möbelstück, das mit einer Abdeckung nach einem der Ansprüche 1 bis 14 versehen ist.

18. Gepolstertes Möbelstück, bei dem die Polsterung mit einer Allergenteilchen-Sperrabdeckung versehen, die ein geschichtetes Textilerzeugnis mit einer Luftdurchlässigkeit aufweist, die über der im britischen Standard 4578, 1970 liegt, und das mit einer porösen Textilschicht (11) versehen ist, die eine elektrische Ladung hat, welche Material in den Poren hält.

19. Gegenstand (51) nach einem der Ansprüche 15 bis 18, der eine getrennte äußere Abdeckung (32; 53) aufweist.

20. Gegenstand (51) nach Anspruch 19, bei dem die getrennte äußere Abdeckung (32; 53) abnehmbar ist.

21. Gegenstand (51) nach Anspruch 19 oder Anspruch 20, bei dem die getrennte äußere Abdeckung (32) durch eine feste Abdichtung (34) verschließbar ist, so dass kein Weg für allergenes Material aus dem Inneren der Abdeckung nach außen gelassen wird.

22. Gegenstand (51) nach Anspruch 21, bei dem die äußere Abdeckung (53) durch einen Reißverschluss (34) verschließbar ist.

23. Gegenstand (51) nach Anspruch 21 oder Anspruch 22, bei dem eine lineare Schließanordnung (34) durch eine Dichtklappe (35) unterlegt ist.

24. Gegenstand nach einem der Ansprüche 15 bis 23, bei dem zusätzlich zu der Allergenteilchen-Sperrabdeckung eine getrennte abnehmbare Abdeckung (53) vorgesehen ist.

## Revendications

1. Revêtement d'exclusion des particules allergènes formant une enveloppe dans laquelle un corps en matériau peut être intégré, ledit revêtement comprenant un tissu laminé ayant une perméabilité à l'air supérieure à celle spécifiée dans la Norme britannique 4578, 1970 et comprenant une couche de tissu poreuse (11) ayant une charge électrostatique qui piège le matériau dans les pores.

2. Revêtement selon la revendication 1, dans lequel ladite couche poreuse (11) a une charge électrostatique globale.

3. Revêtement selon la revendication 2, dans lequel ladite couche poreuse (11) est un tissu tel que du Villedon ®, dans lequel la charge est produite pendant la fabrication du tissu.

4. Revêtement selon la revendication 1, dans lequel ladite couche poreuse (11) est un tissu n'ayant pas de charge globale.

5. Revêtement selon la revendication 4, dans lequel ladite couche poreuse (11) est un mélange de fibres ayant des charges électriques opposées.

6. Revêtement selon la revendication 5, dans lequel lesdites fibres comprennent des fibres en polypropylène et en acrylique.

7. Revêtement selon l'une quelconque des revendications 1 à 6, dans lequel ladite couche poreuse (11) est laminée sur un tissu (12) ayant au moins une perméabilité correspondante.

8. Revêtement selon l'une quelconque des revendications 1 à 7,d ans lequel ladite couche poreuse (11) est un tissé.

9. Revêtement selon l'une quelconque des revendications 1 à 7, dans lequel ladite couche poreuse (11) est un tissu maille.

10. Revêtement selon l'une quelconque des revendications 1 à 9, dans lequel ladite couche poreuse (11) est laminée sur les deux faces avec un autre tissu.

11. Revêtement selon l'une quelconque des revendications 1 à 10, dans lequel une face externe du tissu laminé est rendue imperméable à l'eau.

12. Revêtement selon la revendication 11, dans lequel l'imperméabilisation est réalisée par l'intermédiaire d'un enduit au silicone ou avec un produit semblable.

13. Revêtement selon l'une quelconque des revendications 1 à 12, dans lequel la face externe du tissu laminé est résistante à la salissure.

14. Revêtement selon l'une quelconque des revendications 1 à 13, dans lequel un remplissage, éventuellement une mousse, un rembourrage ou un duvet, est inséré.

15. Article de literie doté d'un revêtement selon l'une quelconque des revendications 1 à 14.

16. Article ayant la forme d'un jouet pour enfant ou nourrisson doté d'un revêtement selon l'une quelconque des revendications 1 à 14.

17. Article d'ameublement doté d'un revêtement selon l'une quelconque des revendications 1 à 14.

18. Article rembourré d'ameublement, le rembourrage étant doté d'un revêtement d'exclusion des particules allergènes comprenant un tissu laminé ayant une perméabilité à l'air supérieure à celle spécifiée dans la Norme britannique 4578, 1970 et comprenant une couche de tissu poreuse (11) ayant une charge électrostatique qui piège le matériau dans les pores.

19. Article (51) selon l'une quelconque des revendications 15 à 18, ayant un revêtement externe séparé (32 ; 53).

20. Article (51) selon la revendication 19, dans lequel le revêtement externe séparé (32 ; 53) est amovible.

21. Article (51) selon la revendication 19 ou 20, dans lequel le revêtement externe séparé (32) peut être fermé par une fermeture étanche (34) de manière à ce que le matériau allergénique ne puisse passer de l'intérieur vers l'extérieur du revêtement.

22. Article (51) selon la revendication 21, dans lequel ledit revêtement externe (53) peut être fermé par un moyen de fixation à glissière (34).

23. Article (51) selon la revendication 21 ou la revendication 22, dans lequel un agencement de fixation linéaire (34) repose sur un rabat de fermeture étanche (35).

24. Article selon l'une quelconque des revendications 15 à 23, comprenant, outre le revêtement d'exclusion des particules allergènes, un revêtement amovible séparé (53).
